# EUROPÄISCHE PATENTSCHRIFT

(11) **EP 1 817 837 B1**
(45) Veröffentlichungstag und Bekanntmachung des Hinweises auf die Patenterteilung: **04.01.2012**
(21) Anmeldenummer: 05810654.3
(22) Anmeldetag: 29.11.2005
(51) Int. Cl.: H02K 49/06, H02K 7/108, H02K 7/11, H02K 7/102, H02K 7/106

(54) **EINSTELLBARER HYSTERESEMITNEHMER**
ADJUSTABLE HYSTERESIS DRIVER
ENTRAINEUR A HYSTERESIS REGLABLE

(30) Priorität: 01.12.2004 DE 102004057848
(43) Veröffentlichungstag der Anmeldung: 15.08.2007
(73) Patentinhaber: ZF FRIEDRICHSHAFEN Aktiengesellschaft, 88038 Friedrichshafen (DE)
(72) Erfinder: PESCHECK, Jürgen, 88090 Immenstaad (DE); UNSELD, Stefan, 88138 Weissensberg (DE); THOMA, Konrad, 88048 Friedrichshafen (DE)
(86) Internationale Anmeldenummer: PCT/EP2005/012710
(87) Internationale Veröffentlichungsnummer: WO 2006/058688

(56) Entgegenhaltungen:
- EP-A- 0 855 515
- DE-A1- 3 628 285
- DE-A1- 19 917 667
- GB-A- 1 294 465
- US-A- 1 697 292
- US-B1- 6 244 395

## Beschreibung

Die Erfindung betrifft einen einstellbaren Hysteresemitnehmer gemäß dem Oberbegriff des Patentanspruchs 1 bzw. 2. Die Merkmale des Oberbegriffs von Anspruch 1 sind aus der DE 36 28 285 A1 bekannt und die des Anspruchs 2 aus der US 6 244 395 B1.

Hysteresemitnehmer in Form von Hysteresekupplungen beziehungsweise Hysteresebremsen sind seit geraumer Zeit in vielen Ausführungsformen bekannt. Der Vorteil derartiger Kupplungen bzw. Bremsen besteht im Wesentilchen in einer berührungslosen Drehmomentübertragung über einen Luftspalt. Die Arbeitsweise dieser Vorrichtungen beruht auf der magnetischen Kraftwirkung sich anziehender Pole im Synchronbetrieb bzw. einer ständigen Ummagnetisierung eines an diesen Polen vorbeibewegten permanentmagnetischen Hysteresematerials im Schlupfbetrieb. So sind beispielsweise aus der DE 39 05 216 A1 und der DE 199 17 667 A1 elektromagnetisch erregbare Hysteresekupplungen bekannt, deren übertragbares Drehmoment in Abhängigkeit von dem durch eine Erregerspule fließenden Strom einstellbar ist.

Aus der DE 37 32 766 A1 ist des Weiteren eine permanentmagneten-egte Hysteresekupplung bekannt, bei der das zu übertragende Drehmoment durch eine manuelle Veränderung der Eintauchtiefe eines Hysterese-Ringkörpers In einem zwischen zwei Polringen des Permanentmagneten gebildeten Luftspalt veränderbar ist.

Zudem ist es aus der DE 2 261 708 A bekannt, eine Hysteresekupplung in einem Nebenaggregatetrieb eines Kraftfahrzeuges derart zu betreiben, dass diese In Abhängigkeit von der Temperatur der Kühlflüssigkeit oder der Öltemperatur einer Brennkraftmaschine aktiviert oder deaktiviert wird. Diese Hysteresekupplung verfügt über zuschaltbare Elektromagneten, also mehrere elektromagnetische Felder, mit zueinander komplementären Polen.

Ferner sind aus der DE 197 46 359 C2 sowie aus der DE 100 18 721 A1 regelbare Kühlmittelpumpen für Kraftfahrzeuge mit Hysteresekupplung bekannt, wobei die erstgenannte Druckschrift eine permanentmagnetemegte Hysteresekupplung beschreibt, deren eine Kupplungshälfte mittels einer elektrisch betriebenen Verstelleinheit axial verschiebbar ist, so dass die Spaltweite des zwischen den Kupplungshälften ausgebildeten Luftspaltes und damit das zu übertragende Drehmoment in Abhängigkeit vom Betriebszustand des Verbrennungsmotors variiert werden kann. Die DE 100 18 721 A1 betrifft demgegenüber eine elektromagneterregte Hysteresekupplung, bei der das übertragbare Drehmoment in Abhängigkeit von der Stärke des durch eine Spule eines Elektromagneten fließenden Stromes regel- bzw. verstellbar ist.

Diesen bekannten Hysteresekupplungen ist gemeinsam, dass sie eine elektrische oder elektromechanische Regelung der Drehmomentübertragung nutzen, welches mit dem Nachteil verbunden ist, dass bei einem Ausfall der Stromversorgung derartige Hysteresekupplungen nicht mehr ihre bestimmungsgemäße Funktion erfüllen können.

Vor diesem Hintergrund liegt der Erfindung die Aufgabe zugrunde, einen verbesserten einstellbaren bzw. regelbaren Hysteresemitnehmer, nämlich eine Hysteresekupplung oder eine Hysteresebremse, vorzustellen, welcher einerseits eine stufenlose Drehmomenteinstellung ermöglicht und andererseits auch beim Ausfall der Stromversorgung zur Drehmomentübertragung fähig ist Ein solcher Hysteresemitnehmer soll beispielsweise auch in einem Nebenaggregatetrieb eines Antriebsmotors eines Kraftfahrzeuges bzw. einem Nebenabtrieb einsetzbar sein.

Die Lösung dieser Aufgabe ergibt sich aus den Merkmalen des Anspruchs 1 bzw. 2, während vorteilhafte Ausgestaltungen und Weiterbildungen der Erfindung den Unteransprüchen entnehmbar sind.

Durch diese Maßnahme wird beispielsweise bei einem Einsatz der Hysteresekupplung in einem Nebenaggregatetrieb einer Brennkraftmaschine eines Kraftfahrzeuges sichergestellt, dass auch bei einem Ausfall der Stromversorgung für die Erregerwicklung des Elektromagneten dennoch ein Drehmoment von der Eingangsseite zur Ausgangsseite dieser Kupplung übertragbar ist. Dieses kann beispielsweise dann von besonderer Bedeutung sein, wenn dieser Nebenaggregatetrieb der Brennkraftmaschine dazu dient, ausgehend von der Kurbelwelle der Brennkraftmaschine über die Hysteresekupptung eine Fahrzeugkühleinrlchtung anzutreiben, die auch bei einem Ausfall der Spannungsversorgung bzw. einem Defekt für einen Abtransport von Wärme sorgen soll.

Bei der erfindungsgemäß ausgebildeten Hysteresebremse ist bei Ausfall der Stromversorgung für die Erregerwicklung des Elektromagneten ebenfalls ein Drehmoment, vorliegend ein negatives Drehmoment, auf das Ankerteil und die angeschlossenen Welle, welches eine Anschlusswelle zu einem Nebenaggregat sein kann, übertragbar.

Die erfindungsgemäß ausgebildete Hysteresekupplung umfasst als Mittel zur Realisierung der "Fail-Safe"-Funktion zumindest ein mit dem genannten Rotorteil drehfest jedoch axial verschiebbar verbundenes erstes mechanisches Kupplungselement, welches bei einem Ausfall der Stromversorgung für den Elektromagneten mit einem fest mit dem Ankerteil verbundenen zweiten mechanischem Kupplungselement reib- und/oder formschlüssig verbindbar ist.

Die erfindungsgemäße Hysteresebremse umfasst als Mittel zur Realisierung der "Fail-Safe"-Funktion zumindest ein direkt mit dem genannten Statorteil drehfest jedoch axial verschiebbar verbundenes erstes mechanisches Kupplungselement, welches bei einem Ausfall der Stromversorgung für den Elektromagneten mit einem fest mit dem Ankerteil verbundenen zweiten mechanischem Kupplungselement reib- und/oder formschlüssig verbindbar ist.

Wie die Erfindung weiter vorsieht, ist das erste mechanische Kupplungselement bevorzugt durch einen Reibring und das zweite mechanische Kupplungselement durch einen Reibbelag gebildet.

Gemäß einer anderen Ausgestaltungsform der Erfindung kann aber auch vorgesehen sein, dass die beiden zueinander korrespondierenden mechanischen Kupplungselemente als Bestandteile einer Zahnkupplung ausgebildet sind.

Erfindungsgemäß ist das erste mechanische Kupplungselement in axialer Richtung durch eine Federkraft gegen das korrespondierende zweite mechanische Kupplungselement anstellbar jedoch im Normalbetrieb mittels der Magnetkraft am Rotorteil der erfindungsgemäßen Hysteresekupplung respektive am Statorteil der erfindungsgemäßen Hysteresebremse fixiert. Diese Magnetkraft zur örtlichen Fixierung des ersten mechanischen Kupplungselements wird vorteilhaft dabei durch die Erregerspule des Elektromagneten oder durch eine Erregerspule eines separaten elektrischen Zusatzmagneten erzeugt.

Erfindungsgemäß ist auch eine Überlastsicherung vorgesehen, die einen erzeugten Reib- und/oder Formschluss zwischen den beiden mechanischen Kupplungselementen mindert oder aufhebt. Dadurch können mit der Hysteresekupplung bzw. der Hysteresebremse zusammenwirkende Bestandteile beispielsweise eines Nebenaggregatetriebs bzw. Nebenabtriebs wirkungsvoll vor Schäden geschützt werden.

Gemäß einer Variante, die nicht zur Erfindung gehört kann der Hysteresemitnehmer derart ausgebildet sein, dass dem zumindest einen Permanentmagneten zur Einstellung der Drehmomentübertragungsfähigkeit des Hysteresemitnehmers zumindest ein Elektromagnet zugeordnet ist, dessen Magnetfeld dasjenige des Permanentmagneten in Abhängigkeit von der angelegten Spannung verändert oder verdrängt Dabei ist das Mittel zur Realisierung einer "Fail-Safe"-Funktion des Hysteresemitnehmers durch den Permanentmagneten selbst gebildet, dessen Magnetfeld bei einem Ausfall der Stromversorgung des Elektromagneten unverändert weiter wirkt und demgemäß eine Kopplung des Rotorteils einer Hysteresekupplung respektive Statorteils einer Hysteresebremse mit dem Ankerteil zur Übertragung eines Drehmomentes gewährleistet.

Demgegenüber sieht eine weitere nicht zur Erfindung gehörende Ausfühungsform vor, dass zur Einstellung der Drehmomentübertragungsfähigkeit des Hysteresemitnehmers ein die obereckung von Rotorteil einer Hysteresekupplung respektive Statorteil einer Hysteresebremse und Hystereseteil veränderbare elektromechanische Verstelleinheit vorgesehen ist, wobei das Mittel zur Realisierung einer Faii-Sofe"-Funktion des Hysteresemitnehmers durch zumindest ein Federelement gebildet ist, welches bei einem Ausfall der Stromversorgung des Elektromagneten selbsttätig das Rotorteil der Hysteresekupplung respektive Statorteil der Hysteresebremse und das Hystereseteil samt Ankerteil in eine derartige Position zueinander überführt, dass eine Übertragung eines Drehmomentes gewährleistet ist.

Zur Verdeutlichung der Erfindung ist der Beschreibung eine Zeichnung beigefügt. In dieser zeigen
- Fig. 1: eine Schnittdarstellung eines erfindungsgemäß ausgebildeten Hysteresemitnehmers in Form einer Hysteresekupplung gemäß einer ersten Ausführungsform,
- Fig. 2: eine Schnittdarstellung einer Hysteresekupplung gemäß einer zweiten Ausfühfungsform, die nicht zur Erfindung ge hört,
- Fig. 3: eine Schnittdarstellung eines erfindungsgemäß ausgebildeten Hysteresemitnehmers in Form einer Hysteresebremse gemäß einer ersten Ausführungsform, und
- Fig. 4: eine Schnittdarstellung einer Hysteresebremse gemäß einer zweiten Ausführungsform, die nicht zur Erfindung ge hört.

Bei allem im folgenden aufgeführten Ausführungsformen, die nicht zur Erfindung gehören, handelt es sich um Beispiele, die das Verständnis der Erfindung erleichten.

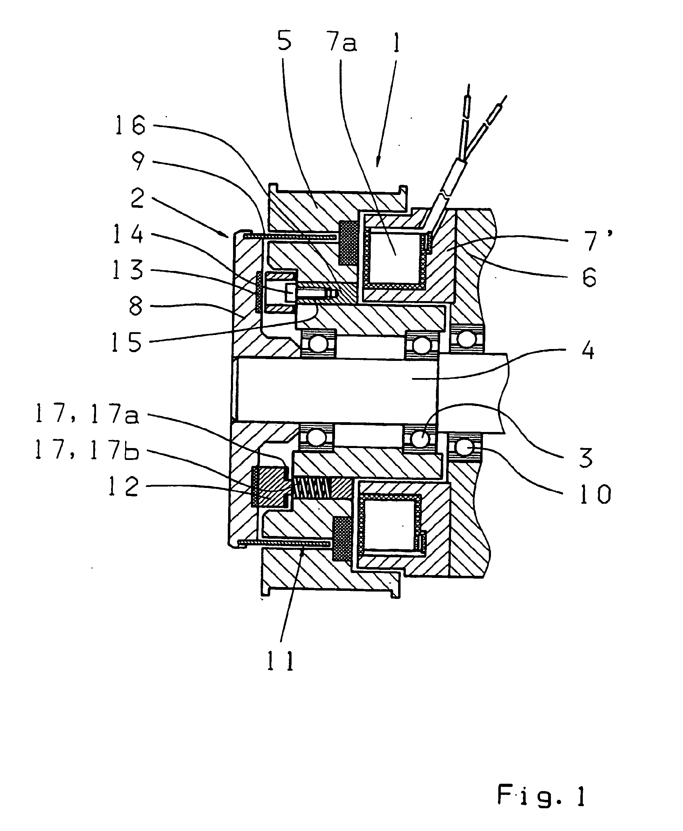

Die in Fig. 1 dargestellte Hysteresekupplung weist eine Erregereinheit 1 und eine Hystereseeinheit 2 auf, die hinsichtlich der Funktionsfähigkeit der Hysteresekupplung zusammenwirken. Die Erregereinheit 1 umfasst zunächst ein mittels Kugellager 3 auf einer Welle 4, vorliegend einer Abtriebswelle, drehgelagertes Rotorteil 5, welches als Triebscheibe ausgebildet und über ein nicht näher dargestelltes flexibles Umschlingungsmittel von der Kurbelwelle eines Verbrennungsmotors eines Kraftfahrzeuges antreibbar ist. Zudem ist ein mit einem ortsfest angeordneten Gehäuseteil 6 verbundenes Statorteil 7'mit einem Elektromagneten 7a vorhanden, welches die Welle 4 sowie einen wellennahen Abschnitt des Rotorteils 5 teilweise koaxial umgreift.

Die Hystereseeinheit 2 ist durch ein rotationssymmetrisches Ankerteil 8 gebildet, welches radial innen drehfest mit der Welle 4 verbunden ist und radial außen ein Hystereseteil 9 in Form eines axial ausgerichteten Hystereserings aus einem an sich bekannten homogenen Hysteresematerial aufweist.

Die Welle 4 stützt sich mittels eines Kugellagers 10 am ortsfesten Gehäuseteil 6 ab und ist mit einem nicht näher gezeigten Nebenaggregat, welches beispielsweise eine Kühlmittelpumpe oder ein Lüfter sein kann, verbunden.

Das als Hysteresering ausgebildete Hystereseteil 9 reicht axial in einen ebenfalls axial ausgerichteten Luftspalt 11 des aus einem weichmagnetischen Werkstoff bestehenden Rotors 5 hinein, ohne denselben zu berühren. Beim Anlegen einer elektrischen Spannung an die Erregerspule des Elektromagneten 7a des Statorteils 7' wird aufgrund des Stromflusses durch dieselbe ein Magnetfeld erzeugt, welches im angetriebenen Rotorteil 5 einen magnetischen Fluss mit von Pol zu Pol wechselnder Polarität induziert. Dieses führt im Hysteresematerial des Hystereseteils 9 bei einer Drehbewegung des Rotors 5 zu einem kontinuierlichen Umrichten von Elementarmagneten, wodurch auf das fest mit dem Hystereseteil 9 verbundene Ankerteil 8 ein Drehmoment aufgebracht wird. Die mit dem Ankerteil 8 drehfest verbundene Welle 4 überträgt das Drehmoment dann auf das angeschlossene Nebenaggregat.

Für den Fachmann ist in Kenntnis der Erfindung leicht nachvollziehbar, dass beim Ausfall der Stromversorgung für den Elektromagneten 7a die elektromagnetische Kopplung zwischen dem Rotorteil 5 und dem Ankerteil 8 unterbrochen wird, da die erforderlichen und miteinander in Wechselwirkung tretenden Magnetfelder des Elektromagneten 7a nicht mehr ausgebildet werden können. Dieses kann zu kritischen Betriebsbedingungen des Verbrennungsmotors und/oder anderer von der ordnungsgemäßen Funktion des Nebenaggregates abhängiger Geräte eines Kraftfahrzeugs führen.

Um diesem kritischen Betriebsfall wirksam begegnen zu können, ist erfindungsgemäß zumindest ein aktiv wirkendes Mittel zur Realisierung einer so genannten "Fail-Safe"-Funktion der Hysteresekupplung vorgesehen, welches auch bei einem Ausfall der Stromversorgung zum Elektromagneten 7a eine definierte Kopplung zwischen dem Rotorteil 5 und dem Ankerteil 8 zur Übertragung eines Drehmomentes vom Verbrennungsmotor auf das Nebenaggregat gewährleistet.

Das Mittel zur Realisierung dieser "Fail-Safe"-Funktion der Hysteresekupplung ist gemäß der in Fig. 1 dargestellten Variante der Erfindung durch zumindest ein mit dem Rotorteil 5 drehfest und axial verschiebbar verbundenes erstes mechanisches Kupplungselement 12 gebildet, das bei einem Ausfall der Stromversorgung mit einem fest mit dem Ankerteil 8 verbundenen zweiten mechanischen Kupplungselement 13 reib- und/oder formschlüssig verbindbar ist.

Das erste mechanische Kupplungselement 12 ist vorliegend als Reibscheibe ausgebildet. Es besteht zweckmäßigerweise aus einem magnetischen Eisenwerkstoff. Dieses erste mechanische Kupplungselement 12 kann beispielsweise mittels Führungsbolzen oder Schrauben 14, die in Führungsbohrungen 15 des Rotorteils 5 angeordnet sind, drehfest und axial beweglich mit diesem Rotorteil 5 verbunden sein.

In der dargestellten Ausführungsform kann das erste mechanische Kupplungselement 12 zum Beispiel über eine Spiraldruckfeder 17b gegen die Reibfläche 13 am Ankerteil 8 angepresst werden.

Alternativ dazu ist das erste mechanische Kupplungselement 12 mit einer Membranfeder 17a verbunden, die ebenfalls Drehmoment übertragen kann und eine Axialbewegung des Kupplungselementes 12 erlaubt. Diese Membranfeder 17a ist z.B. mittels Schrauben mit dem Rotorteil 5 verbunden.

Um eine magnetische Zugkraft auf das erste mechanische Kupplungselement 12 erzeugen zu können, ist im Rotorteil 5 eine magnetische Isolation erforderlich, in dessen Material auch die genannten Führungsbolzen oder Schrauben 14 befestigt bzw. die Spiraldruckfedern 17b angeordnet sind.

Im Normalbetrieb, wenn also ein elektrischer Strom durch die Wicklung der Erregerspule des Elektromagneten 7a fließt, wird aufgrund des Stromflusses ein Magnetfeld erzeugt, welches zum einen im angetriebenen Rotorteil 5 einen magnetischen Fluss induziert, zum anderen aber auch dazu dient, das erste mechanische Kupplungselement 12 gegen die Federkraft der Federelemente 17 mittels Magnetkraft am Rotorteil 5 zu fixierten.

Anstelle der durch die Erregerspule des Elektromagneten 7a erzeugten Magnetkraft kann auch die Magnetkraft der Erregerspule eines separaten Zusatzmagneten zur Fixierung des ersten mechanischen Kupplungselementes 12 am Rotorteil 5 Verwendung finden (nicht näher dargestellt).

Wenn durch eine Fehlfunktion der Stromfluss durch die Erregerspule des Elektromagneten 7a ausfällt, dann wirken die Federelemente 17 derart, dass diese das erste mechanische Kupplungselement 12 (Reibscheibe) gegen das zweite mechanische Kupplungselement 13 (Reibbelag) pressen und somit einen Reibschluss realisieren, mittels dem eine Drehmomentübertragung von der Eingangsseite zur Ausgangsseite der Hysteresekupplung gewährleistet ist.

Über die Federkraft der Federelemente 17 kann auch eine minimal übertragbare Kraft zwischen den beiden mechanischen Kupplungselementen 12 und 13 eingestellt werden, um eine Überlastung von Bauteilen und Aggregaten, wie beispielsweise eines Treibriemens, zu verhindern.

Anstelle eines Reibschlusses zwischen einer Reibscheibe und einem korrespondierenden Reibbelag können gemäß einer anderen Variante der Erfindung auch Mittel zur Realisierung eines Formschlusses zwischen dem Rotorteil 5 und dem Ankerteil 8 der Hysteresekupplung vorgesehen sein. Hierfür bieten sich beispielsweise nicht näher gezeigte und miteinander formschlüssig in Eingriff bringbare Kupplungselemente einer an sich bekannten und vorzugsweise ringförmig ausgebildeten Zahnkupplung an.

Die Kupplungselemente einer solchen Zahnkupplung sind in Anlehnung an das vorstehende Ausführungsbeispiel ebenfalls aus einem Eisenwerkstoff gefertigt und werden im Normalbetrieb bei strombeaufschlagter Erregerspule des Elektromagneten 7a durch die genannte Magnetkraft zueinander beabstandet gehalten. Erst bei einem Ausfall der Stromversorgung des Elektromagneten 7a werden auch diese beiden mechanischen Kupplungselemente durch Federkraft formschlüssig miteinander verbunden.

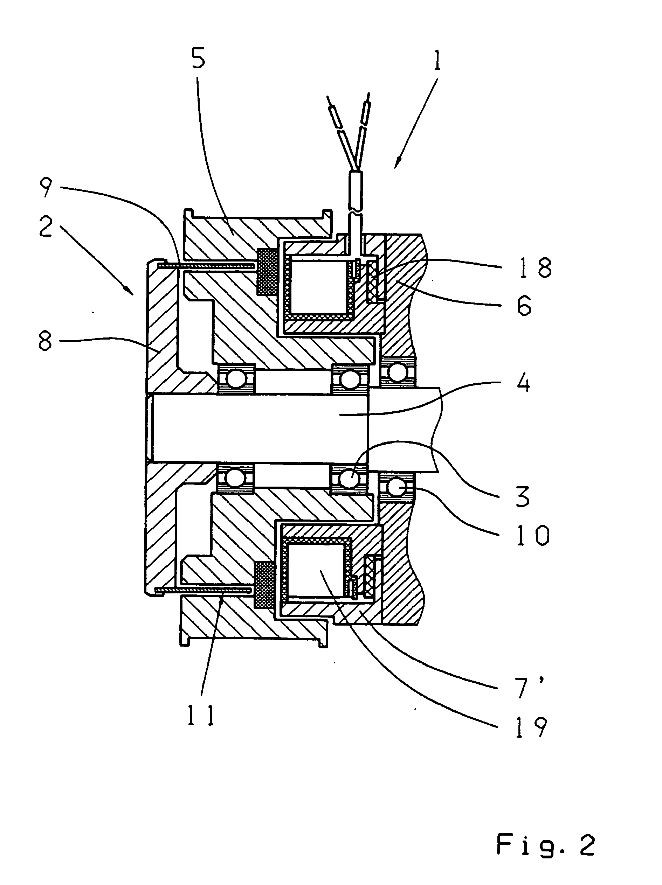

Fig. 2 zeigt eine zweite Hysteresekupplung in einer Ausführungsform, die nicht zur Erfindung gehört. Diese unterscheidet sich von der vorbeschriebenen Hysteresekupplung im Wesentlichen dadurch, dass das Rotorteil 5 nicht elektromagnetisch, sondern durch zumindest einen vom Statorteil 7'aufgenommenene Permanentmagneten 18 erregbar ist.

Diesem zumindest einen Permanentmagneten 18 ist zur Einstellung des von der Hysteresekupplung übertragbaren Drehmoments zumindest ein Elektromagnet 19 zugeordnet, der ebenfalls vom Statorteil 7 aufgenommen ist. Das Magnetfeld des Elektromagneten 19 kompensiert in Abhängigkeit von der angelegten Spannung bzw. von dem durch den Elektromagneten 19 fließenden Strom mehr oder weniger stark das Magnetfeld des Permanentmagneten 18, so dass ein mehr oder weniger großer Schlupf zwischen dem Rotorteil 5 und der aus dem Ankerteil 8 und dem daran befestigten Hystereseteil 9 bestehenden Hystereseeinheit 2 entsteht, wodurch die Größenordnung des Drehmoments der Hysteresekupplung einstellbar ist.

Fällt die Stromversorgung des Elektromagneten 19 aufgrund einer Fehlfunktion aus, ist das Magnetfeld des Permanentmagneten 18 voll wirksam, wodurch im Ergebnis auf das fest mit dem Hystereseteil 9 verbundene Ankerteil 8 samt Welle 4 und Nebenaggregat ein definiertes Drehmoment übertragen wird.

Gemäß einer weiteren Ausführungsform, die nicht zur Erfindung gehört, wird von einer Hysteresekupplung ausgegangen, deren Rotorteil 5 mittels zumindest eines Permanentmagneten 18 erregbar ist, wobei die Einstellung des Drehmoments der Kupplung durch eine elektromechanische Verstelleinheit zur Veränderbarkeit der Überdeckung oder Beabstandung von Rotorteil 5 und Hystereseteil 9 durchgeführt wird. Eine solche an sich bekannte elektromechanische Verstelleinheit ist beispielsweise in der DE 197 46 359 C2 beschrieben.

Zur Realisierung einer "Fait-Safe"-Funktion bei einer solchen Hysteresekupplung ist zumindest ein Federelement vorgesehen, welches bei einem Ausfall der Stromversorgung für die elektromechanische Verstelleinheit selbsttätig das Rotorteil 5 und das Hystereseteil 9 in eine derartige Position zueinander überführt, dass eine Kopplung des Rotorteils 5 mit dem Hystereseteil 9 samt Ankerteil 8 zur Übertragung eines Drehmomentes von der Eingangsseite zur Ausgangsseite der Hysteresekupplung gewährleistet ist.

Vorstehende Ausführungsbeispiel bzw. Ausführungsformen, die nicht zur Erfindung gehören, stellen auf einen Hysteresemitnehmer in Form einer Hysteresekupplung ab. Durch die Erfindung mit erfasst ist jedoch auch eine Hysteresebremse, die im Wesentlichen der Aufbringung eines negativen Drehmomentes auf ein mit einer Welle 4 drehfest verbundenes Ankerteil 8 dient. Die Welle 4 kann beispielsweise eine angetriebene und mit einem nicht näher gezeigten Nebenaggregat verbundene Anschlusswelle sein.

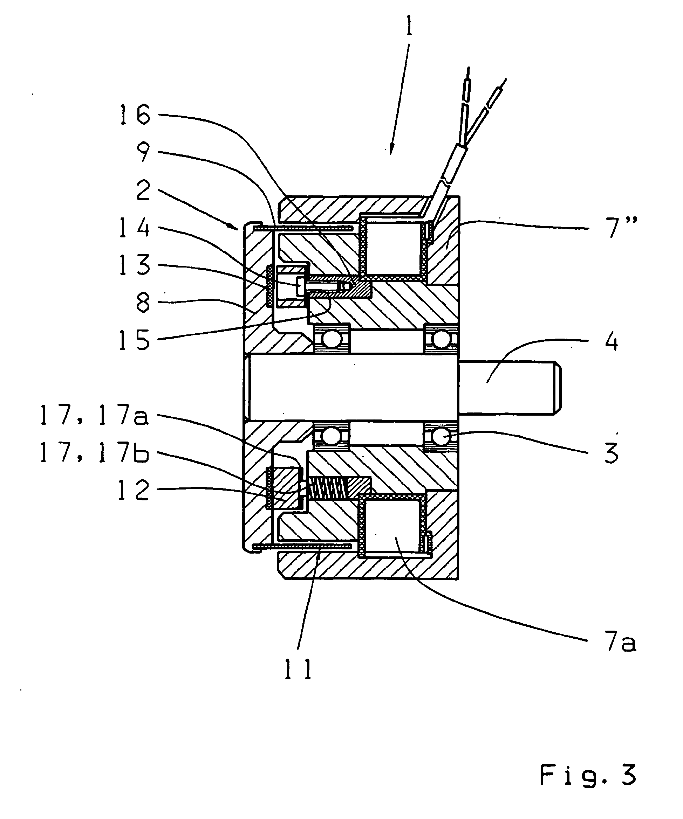

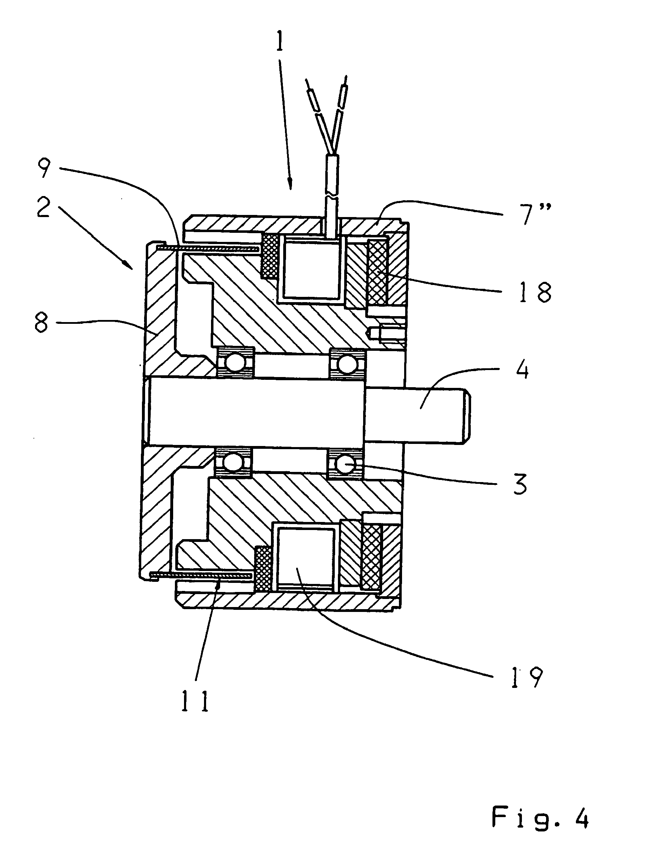

Gemäß Figur 3, die ein Ausführungsbeispiel zeigt, und gemäß Figur 4, die eine Ausführungsform zeigt, welche nicht zur Erfindung gehört, unterscheidet sich die in Rede stehende Hysteresebremse zur vorbeschriebenen Hysteresekupplung konstruktiv zunächst lediglich dadurch, dass hier ein Rotorteil 5 entbehrlich ist. Das Hystereseteil 9 in Form des axial ausgerichteten Hystereserings reicht nunmehr direkt axial in einen ebenfalls axial ausgerichteten Luftspalt 11 des aus einem weichmagnetischen Werkstoff bestehenden sowie ortsfest angeordneten Statorteils 7" hinein, welches seinerseits den Elektromagneten 7a umfasst. Beim Anlegen einer elektrischen Spannung an die Erregerspule des Elektromagneten 7a des Statorteils 7" wird aufgrund des Stromflusses durch dieselbe ein Magnetfeld erzeugt, welches bekanntermaßen im Hysteresematerial des über die Welle 4 und das Ankerteil 8 mittels Fremdkraft drehangetriebenen Hystereseteils 9 zu einem kontinuierlichen Umrichten von Elementarmagneten führt, wodurch wiederum auf das fest mit dem Hystereseteil 9 verbundene Ankerteil 8 und demgemäß auf die Welle 4 ein negatives Drehmoment im Sinne einer Bremskraft aufbringbar ist.

Um auch hier wirkungsvoll dem kritischen Betriebsfall des Ausfalls der Stromversorgung für den Elektromagneten 7a zu begegnen, ist zur Realisierung einer "Fail-Save"-Funktion ebenfalls ein erstes mechanisches Kupplungselement 12 der oben beschriebenen Art vorgesehen, welches bei Ausfall der Stromversorgung mit einem fest mit dem Ankerteil 8 verbundenen zweiten mechanischen Kupplungselement 13 reib- und/oder formschlüssig verbindbar ist. Im Unterschied zur Hysteresekupplung stützt sich jedoch das erste mechanische Kupplungselement 12 nunmehr direkt am Statorteil 7" ab; es ist somit fest angeordnet (Fig. 3)

Hinsichtlich der weiteren Ausgestaltung und besonderen Funktionsweise der Kupplungselemente 12, 13 als Reibscheibe und Reibbelag bzw. als Zahnkupplung sind im Hinblick auf die oben beschriebene Hysteresekupplung keine Unterschiede zu verzeichnen, so dass sich dementsprechende Ausführungen erübrigen und in den Zeichnungen für gleiche Bauteile gleiche Bezugszeichen Verwendung finden.

Fig. 4 zeigt in einer Ausführungsform, die nicht zur Erfindung gehört, eine Hysteresebremse, die in Anlehnung zu der in Fig. 2 gezeigten Hysteresekupplung nicht elektromagnetisch, sondern durch zumindest einen fest am Statorteil 7" angeordneten Permanentmagneten 18 erregbar ist.

Diesem zumindest einen Permanentmagneten 18 ist zur Einstellung eines von der Hysteresebremse auf die Welle 4 übertragbaren negativen Drehmomentes bzw. Bremsmomentes ebenfalls zumindest ein Elektromagnet 19 zugeordnet. Das Magnetfeld des Elektromagneten 19 kompensiert in Abhängigkeit von der angelegten Spannung bzw. von dem durch den Elektromagneten 19 fließenden Strom mehr oder weniger stark das Magnetfeld des Permanentmagneten 18, wodurch die Größenordnung des negativen Drehmoments der Hysteresebremse einstellbar ist.

Fällt die Stromversorgung des Elektromagneten 19 aufgrund einer Fehlfunktion aus, so ist das Magnetfeld des Permanentmagneten 18 voll wirksam, wodurch im Ergebnis auf das fest mit dem Hystereseteil 9 verbundene Ankerteil 8 samt Welle 4 und Nebenaggregat ein definiertes negatives Drehmoment übertragen wird.

Gemäß einer nicht näher dargestellten weiteren Ausführungsform, die nicht zur Erfindung gehört, wird von einer Hysteresebremse ausgegangen, die durch zumindest einen fest am Statorteil 7" angeordneten Permanentmagneten 18 erregbar ist. Die Einstellung des aufzubringenden negativen Drehmoments kann, wie bereits oben zur Hysteresekupplung beschrieben, ebenfalls durch eine elektromechanische Verstelleinheit zur Veränderbarkeit der Überdeckung oder Beabstandung von Statorteil 7" und Hystereseteil 9 durchgeführt werden.

Zur Realisierung einer "Fail-Safe"-Funktion bei einer solchen Hysteresebremse ist ebenso zumindest ein Federelement vorgesehen, welches bei einem Ausfall der Stromversorgung für die elektromechanische Verstelleinheit selbsttätig das Statorteil 7" und das Hystereseteil 9 in eine derartige Position zueinander überführt, dass eine Kopplung des Statorteils 7" mit dem Hystereseteil 9 samt Ankerteil 8 zur Übertragung eines definierten negativen Drehmomentes gewährleistet ist.

### Bezugszeichen

- 1: Erregereinheit
- 2: Hystereseeinheit
- 3: Kugellager
- 4: Welle
- 5: Rotorteil
- 6: Gehäuseteil
- 7', 7": Statorteil
- 7a: Elektromagnet
- 8: Ankerteil
- 9: Hystereseteil
- 10: Kugellager
- 11: Luftspalt
- 12: Erstes mechanisches Kupplungselement (am Rotorteil 5 bzw. Statorteil 7")
- 13: Zweites mechanisches Kupplungselement (am Ankerteil 8)
- 14: Führungsbolzen, Schraube
- 15: Führungsbohrung
- 16: Magnetische Isolation
- 17: Federelemente
- 17a: Membranfeder
- 17b: Spiraldruckfeder
- 18: Permanentmagnet
- 19: Elektromagnet

## Patentansprüche

1. Einstellbarer Hysteresemitnehmer,
- mit einem eingangsseitigen mechanisch antreibbaren Rotorteil (5) und einem Statorteil (7'),
- mit einem ausgangseitigen, mit einer Welle (4) drehfest verbundenem Ankerteil (8),
- mit einem Hystereseteil (9), welches mit dem Ankerteil (8) verbunden ist,
- wobei das Statorteil (9) zumindest einen Elektromagneten (7a) aufweist,
- mittels dem in dem Rotorteil (5) und dem Statorteil (7') ein magnetischer Fluss induzierbar ist,
- und bei dem die Einstellung des übertragbaren Drehmomentes elektromagnetisch durchführbar ist,
- wobei der Hysteresemitnehmer durch eine Hysteresekupplung gebildet ist und über ein aktiv wirkendes Mittel zur Realisierung einer "Fail-safe"-Funktion verfügt, welches bei einem Ausfall der Stromversorgung für den Elektromagneten (7a) die Übertragung eines Drehmomentes zum Ankerteil gewährleistet,
- wobei das aktiv wirkende Mittel zur Realisierung der "Fail-safe"-Funktion durch zumindest ein mit dem Rotorteil (5) drehfest jedoch axial verschiebbar verbundenes erstes mechanisches Kupplungselement (12) gebildet ist, welches bei Ausfall der Stromversorgung für den Elektromagneten mit einem fest mit dem Ankerteil (8) verbundenen zweiten mechanischem Kupplungselement (13) reib- und/oder formschlüssig verbindbar ist,
- und wobei das erste mechanische Kupplungselement (12) in axialer Richtung durch eine Federkraft gegen das korrespondierende zweite mechanische Kupplungselement (13) anstellbar ist, jedoch im Normalbetrieb mittels Magnetkraft am Rotorteil fixiert ist,
**dadurch gekennzeichnet,**
- **dass** das aktiv wirkende Mittel zur Realisierung der "Fail-safe"-Funktion eine mechanische Kopplung zwischen dem Rotorteil (5) der Hysteresekupplung und dem Ankerteil (8) gewährleistet,
- und **dass** eine Überlastsicherung vorgesehen ist, die einen erzeugten Reib- und/oder Formschluss zwischen den beiden mechanischen Kupplungselementen (12,13) mindert oder aufhebt

2. Einstellbarer Hysteresemitnehmer,
- mit einem Statorteil (7"),
- mit einem ausgangseitigen, mit einer Welle (4) drehfest verbundenem Ankerteil (8),
- mit einem Hystereseteil (9), welches mit dem Ankerteil (8) verbunden ist,
- wobei das Statorteil (9) zumindest einen Elektromagneten (7a) aufweist,
- mittels dem in dem Statorteil (7") ein magnetischer Fluss induzierbar ist,
- und bei dem die Einstellung des übertragbaren Drehmomentes elektromagnetisch durchführbar ist,
- wobei der Hysteresemitnehmer über ein aktiv wirkendes Mittel zur Realisierung einer "Fail-safe"-Funktion verfügt, welches bei einem Ausfall der Stromversorgung für den Elektromagneten (7a) zwischen dem Statorteil (7") des Hysteresemitnehmers und dem Ankerteil (8) die Übertragung eines Drehmomentes gewährleistet,
- und wobei das erste mechanische Kupplungselement (12) in axialer Richtung durch eine Federkraft gegen das korrespondierende zweite mechanische Kupplungselement (13) anstellbar ist, jedoch im Normalbetrieb mittels Magnetkraft am Statorteil (7") fixiert ist,
**dadurch gekennzeichnet,**
- **daß** der Hysteresemitnehmer durch eine Hysteresebremse gebildet ist,
- **dass** das aktiv wirkende Mittel zur Realisierung der "Fail-safe"-Funktion eine mechanische Kopplung zwischen dem Statorteil (7") der Hysteresebremse und dem Ankerteil (8) gewährleistet,
- **daß** das aktiv wirkende Mittel zur Realisierung der "Fail-safe"-Funkfion durch zumindest ein mit dem Statorteil (7") drehfest jedoch axial verschiebbar verbundenes erstes mechanisches Kupplungselement (12) gebildet ist, welches bei Ausfall der Stromversorgung für den Elektromagneten (7a) mit einem fest mit dem Ankerteil (8) verbundenen zweiten mechanischem Kupplungselement (13) reib- und/oder formschlüssig verbindbar ist,
- und **dass** eine Überiastsicerung vorgesehen ist, die einen erzeugten Reib- und/oder Formschluss zwischen den beiden mechanischen Kupplungselementen (12,13) mindert oder aufhebt.

3. Hysteresemitnehmer nach Anspruch 1 oder 2, **dadurch gekennzeichnet, dass** das erste mechanische Kupplungselement (12) durch einen Reibring und das zweite mechanische Kupplungselement (13) durch einen Reibbelag gebildet ist.

4. Hysteresemitnehmer nach Anspruch 1 oder 2, **dadurch gekennzeichnet, dass** das die beiden zueinander korrespondierenden mechanischen Kupplungselemente (12, 13) als Bestandteile einer Zahnkupplung ausgebildet.sind.

5. Hysteresemitnehmer nach Anspruch 1 oder 2, **dadurch gekennzeichnet, dass** die Magnetkraft zur örtlichen Fixierung des ersten mechanischen Kupplungselementes (12) durch die Erregerspule des Elektromagneten oder eine Erregerspule eines separaten Zusatzmagneten erzeugt wird.

## Claims

1. Adjustable hysteresis driver
- having an input-end rotor part (5), which can be mechanically driven, and a stator part (7'),
- having an output-end armature part (8) which is connected in a rotationally fixed manner to a shaft (4),
- having a hysteresis part (9) which is connected to the armature part (8),
- with the stator part (9) having at least one solenoid (7a)
- by means of which a magnetic flux can be induced in the rotor part (5) and the stator part (7'),
- and in which the torque which can be transmitted can be electromagnetically adjusted,
- with the hysteresis driver being formed by a hysteresis clutch and having an active means for realizing a fail-safe function which ensures that torque is transmitted to the armature part in the event of failure of the power supply for the solenoid (7a),
- with the active means for realizing the fail-safe function being formed by at least a first mechanical clutch element (12) which is connected in a rotationally fixed but axially displaceable manner to the rotor part (5) and which can be connected in a frictional and/or interlocking manner to a second mechanical clutch element (13), which is firmly connected to the armature part (8), in the event of failure of the power supply for the solenoid,
- and with the first mechanical clutch element (12) being able to be positioned against the corresponding second mechanical clutch element (13) in the axial direction by a spring force but being fixed to the rotor part by means of magnetic force during normal operation,
**characterized**
- **in that** the active means for realizing the fail-safe function ensures mechanical coupling between the rotor part (5) of the hysteresis clutch and the armature part (8),
- and **in that** overload protection is provided, this weakening or removing a generated frictional and/or interlocking connection between the two mechanical clutch elements (12, 13).

2. Adjustable hysteresis driver
- having a stator part (7"),
- having an output-end armature part (8) which is connected in a rotationally fixed manner to a shaft (4),
- having a hysteresis part (9) which is connected to the armature part (8),
- with the stator part (9) having at least one solenoid (7a)
- by means of which a magnetic flux can be induced in the stator part (7"),
- and in which the torque which can be transmitted can be electromagnetically adjusted,
- with the hysteresis driver having an active means for realizing a fail-safe function which ensures that torque is transmitted in the event of failure of the power supply for the solenoid (7a) between the stator part (7") of the hysteresis driver and the armature part (8),
- and with the first mechanical clutch element (12) being able to be positioned against the corresponding second mechanical clutch element (13) in the axial direction by a spring force but being fixed to the stator part (7") by means of magnetic force during normal operation,
**characterized**
- **in that** the hysteresis driver is formed by a hysteresis brake,
- **in that** the active means for realizing the fail-safe function ensures mechanical coupling between the stator part (7") of the hysteresis brake and the armature part (8),
- **in that** the active means for realizing the fail-safe function is formed by at least a first mechanical clutch element (12) which is connected in a rotationally fixed but axially displaceable manner to the stator part (7") and which can be connected in a frictional and/or interlocking manner to a second mechanical clutch element (13), which is firmly connected to the armature part (8), in the event of failure of the power supply for the solenoid (7a),
- and **in that** overload protection is provided, this weakening or removing a generated frictional and/or interlocking connection between the two mechanical clutch elements (12, 13).

3. Hysteresis driver according to Claim 1 or 2, **characterized in that** the first mechanical clutch element (12) is formed by a friction ring, and the second mechanical clutch element (13) is formed by a friction lining.

4. Hysteresis driver according to Claim 1 or 2, **characterized in that** the two mechanical clutch elements (12, 13) which correspond to one another are in the form of constituent parts of a toothed clutch.

5. Hysteresis driver according to Claim 1 or 2, **characterized in that** the magnetic force for locally fixing the first mechanical clutch element (12) is generated by the field coil of the solenoid or a field coil of a separate additional magnet.

## Revendications

1. Dispositif d'entraînement à hystérésis réglable, comprenant :
- une partie de rotor (5) pouvant être entraînée mécaniquement du côté de l'entrée et une partie de stator (7'),
- une partie d'armature (8) du côté de la sortie, connectée de manière solidaire en rotation à un arbre (4),
- une partie d'hystérésis (9) qui est connectée à la partie d'armature (8),
- la partie de stator (9) présentant au moins un électroaimant (7a),
- au moyen duquel un flux magnétique peut être induit dans la partie de rotor (5) et la partie de stator (7'),
- et dans lequel l'ajustement du couple transmissible peut être effectué de manière électromagnétique,
- le dispositif d'entraînement à hystérésis étant formé par un accouplement à hystérésis et disposant d'un moyen actif pour réaliser une fonction à sécurité intégrée, qui, dans le cas d'une panne d'alimentation en courant pour l'électroaimant (7a), garantit le transfert d'un couple à la partie d'armature,
- le moyen actif pour réaliser la fonction à sécurité intégrée étant formé par au moins un premier élément d'accouplement mécanique (12) connecté de manière solidaire en rotation mais axialement coulissante à la partie de rotor (5), qui, en cas de panne d'alimentation en courant pour l'électroaimant, peut être connecté par engagement par friction et/ou par coopération de forme à un deuxième élément d'accouplement mécanique (13) connecté fixement à la partie d'armature (8),
- et le premier élément d'accouplement mécanique (12) pouvant être appliqué dans la direction axiale par une force de ressort contre le deuxième élément d'accouplement mécanique correspondant (13), mais étant fixé pendant le fonctionnement normal au moyen d'une force magnétique sur la partie de rotor,
**caractérisé en ce que**
- le moyen actif pour réaliser la fonction à sécurité intégrée garantit un accouplement mécanique entre la partie de rotor (5) de l'accouplement à hystérésis et la partie d'armature (8),
- et **en ce qu'**il est prévu une sécurité contre les surcharges qui réduit ou supprime un engagement produit par friction et/ou par coopération de forme entre les deux éléments d'accouplement mécaniques (12, 13).

2. Dispositif d'entraînement à hystérésis réglable, comprenant :
- une partie de stator (7"),
- une partie d'armature (8) du côté de la sortie, connectée de manière solidaire en rotation à un arbre (4),
- une partie d'hystérésis (9) qui est connectée à la partie d'armature (8),
- la partie de stator (9) présentant au moins un électroaimant (7a),
- au moyen duquel un flux magnétique peut être induit dans la partie de stator (7"),
- et dans lequel l'ajustement du couple transmissible peut être effectué de manière électromagnétique,
- le dispositif d'entraînement à hystérésis disposant d'un moyen actif pour réaliser une fonction à sécurité intégrée, qui, dans le cas d'une panne d'alimentation en courant pour l'électroaimant (7a), garantit entre la partie de stator (7") du dispositif d'entraînement à hystérésis et la partie d'armature (8) le transfert d'un couple, et
- le premier élément d'accouplement mécanique (12) pouvant être appliqué dans la direction axiale par une force de ressort contre le deuxième élément d'accouplement mécanique correspondant (13), mais étant fixé en fonctionnement normal au moyen d'une force magnétique contre la partie de stator (7"),
**caractérisé en ce que**
- le dispositif d'entraînement à hystérésis est formé par un frein à hystérésis,
- **en ce que** le moyen actif pour réaliser la fonction à sécurité intégrée garantit un accouplement mécanique entre la partie de stator (7") du frein à hystérésis et la partie d'armature (8),
- **en ce que** le moyen actif pour réaliser la fonction à sécurité intégrée est formé par au moins un premier élément d'accouplement mécanique (12) connecté de manière solidaire en rotation mais axialement coulissante à la partie de stator (7"), qui, dans le cas d'une panne d'alimentation en courant pour l'électroaimant (7a), peut être connecté par engagement par friction et/ou par coopération de forme à un deuxième élément d'accouplement mécanique (13) connecté fixement à la partie d'armature (8),
- et **en ce qu'**il est prévu une sécurité contre les surcharges qui réduit ou supprime un engagement produit par friction et/ou par coopération de forme entre les deux éléments d'accouplement mécaniques (12, 13).

3. Dispositif d'entraînement à hystérésis selon la revendication 1 ou 2, **caractérisé en ce que** le premier élément d'accouplement mécanique (12) est formé par une bague de friction et le deuxième élément d'accouplement mécanique (13) est formé par une garniture de friction.

4. Dispositif d'entraînement à hystérésis selon la revendication 1 ou 2, **caractérisé en ce que** les deux éléments d'accouplement mécaniques (12, 13) se correspondant mutuellement sont réalisés sous forme de constituants d'un accouplement denté.

5. Dispositif d'entraînement à hystérésis selon la revendication 1 ou 2, **caractérisé en ce que** la force magnétique pour la fixation locale du premier élément d'accouplement mécanique (12) est produite par la bobine excitatrice de l'électroaimant ou par une bobine excitatrice d'un aimant supplémentaire séparé.
